# EUROPEAN PATENT APPLICATION

(11) **EP 1 736 046 A1**
(43) Date of publication of application: **27.12.2006**
(21) Application number: 05105463.3
(22) Date of filing: 21.06.2005
(51) Int. Cl.: A01G 9/12

(54) **Method for producing an arrangement of devices for training plants, apparatus therefore and arrangement**

(71) Applicant: Tas Octrooi B.V. i.o., 2641 PP Pijnacker (NL)
(72) Inventor: Tas, Nicolaas Johannes, 2641 PP, Pijnacker (NL)
(74) Representative: Voncken, Bartholomeus Maria Ch.

(57) **Abstract**

With the method and apparatus according to the present invention an arrangement of devices for training plants is produced, wherein each device for training plants comprises a holder (1) intended for being suspended from a suspension arrangement, such as a stretched cable, and a string of which a first portion (2) is wound onto the holder and a second portion (3) is not, and wherein the arrangement comprises a predetermined number of holders positioned alongside each other. The second portions of all strings are combined into a bundle (6) which is positioned on top of said holders.

## Description

Firstly the invention relates to a method for producing an arrangement of devices for training plants, wherein each device for training plants comprises a holder intended for being suspended from a suspension arrangement, such as a stretched cable, and a string of which a first portion is wound onto the holder and a second portion is not, comprising a first step of winding the first portion of a string on a respective holder, and a second step of transporting the holders towards a collecting location where a predetermined number of holders are positioned alongside each other.

Such a method is known from EP-A-1.491.087 in the name of applicant. According to this known method each second portion of a string is individually arranged according to a predetermined pattern between a holder and a carrier therefor.

It is an object of the present invention to provide an alternative method of the type referred to above.

Therefore, in accordance with the present invention, a method as referred to above is provided, which is characterised by a third step of combining the second portions of the strings into a bundle, and a fourth step of positioning said bundle on top of the holders positioned alongside each other.

In accordance with the inventive method a bundle is created which comprises a number of second portions which is equal to the number of holders which are positioned alongside each other. When a user wishes to use one or more holders of the arrangement, he firstly will remove the bundle from the top of the holders (for example by throwing it down). Next he can grip a holder and remove it from the arrangement, during which process the respective second portion of said holder will slide out of the bundle of second portions. A separated holder is obtained, of which the second portion is free of the holder, whereas the first portion is still wound onto the holder. Such a holder then can be used in a manner as described, for example, in the above-mentioned EP-A-1.491.087.

In a preferred embodiment of the method according to the present invention, the third step comprises a cutting step for cutting the string loose from a string supply and a guide step for positioning each second string portion alongside the other second string portions at a temporary storage. According to this preferred method, not only is each string cut loose from a string supply after the first portion has been wound onto the holder, but also is the second string portion thereof positioned at a temporary storage, at which temporary storage all second string portions of the holders are combined into the bundle.

According to yet another preferred embodiment of the inventive method, during the fourth step the bundle is positioned according to a figure-eight pattern. Such a figure-eight pattern provides for a stable positioning of the bundle on top of the holders, such that the bundle will not unintentionally slide of the holders and the second portions of the bundle will not get entangled into each other.

The invention further relates to an apparatus for producing an arrangement of devices for training plants, wherein each device for training plants comprises a holder intended for being suspended from a suspension arrangement, such as a stretched cable, and a string of which a first portion is wound onto the holder and a second portion is not, with first means for winding the first portion of a string on a respective holder, and second means for transporting the holders towards a collecting location where a predetermined number of holders are positioned alongside each other.

In accordance with the present invention, such an apparatus is characterised by third means for combining the second portions of the strings into a bundle, and fourth means for positioning said bundle on top of the holders positioned along side each other.

In accordance with a first preferred embodiment of the apparatus, the third means comprise cutting means for cutting the string loose from a string supply and guide means for each second string portion positioning each second string portion alongside the other second string portions at a temporary storage.

When such an embodiment is provided, it further is preferred, that the guide means position the second string portions according to a zig-zag pattern at the temporary storage. When the second string portions are positioned according to a zig-zag pattern, the dimensions of the temporary storage (which, for example, may comprises a substantially horizontally extending support table) can be minimised.

For obtaining the positioning of the bundle on top of the holders, the fourth means preferably comprise a movable arm having a free end which is provided with bundle guide means, and an opposite end connected to a fixed pivot, wherein drive means are provided for moving the arm, and thus the bundle guide means, according to a predetermined pattern. When the drive means drive the arm, the bundle is guided by the guide means and deposited on top of the holders according to a predetermined pattern which is determined by the movement given to the movable arm by the drive means.

Preferably, the moveable arm is driven in such a manner that its free end moves according to a figure-eight pattern.

Constructively, it is possible that the arm extends substantially horizontally downwards from the fixed pivot and the drive means comprise two piston-cylinder assemblies of which the working lines include an angle.

Then, it is further preferred that the bundle guide means of the movable arm is driven in such a manner that it is lifted relative to the holders at the center of the figure-eight pattern. In the center of the figure-eight pattern, the bundle crosses itself, such that at that location a thicker package of the bundle is obtained. For avoiding a contact between the bundle guide means and the deposited bundle at that location while still keeping the bundle guide means as close to the holders as possible (for obtaining the most neat positioning of the bundle) such a lifting motion of the bundle guide means is very effective.

One way of obtaining such a lifting motion of the bundle guide means is the provision of a bundle guide means which is slidable along the arm. For example, such a sliding movement of the bundle guide means can be caused by two extendable linking arms, each having a first end connected to said bundle guide means and each having a second end, which second ends are connected to two respective fixed points at opposite sides of the pivot of the movable arm, and wherein the linking arms are pre-tensioned towards a retracted position. As a result of such a construction, the bundle guide means follows a track which is defined by two circle segments which intersect. At the intersection between both circles segments the bundle guide means is transferred from one circle segment to the other. The intersection defines the highest location of the track, which highest location is positioned above the center of the figure-eight pattern of the bundle.

When, in accordance with yet another embodiment of the apparatus according to the present invention, the fourth means further comprise guide pins for defining the shape of the figure-eight pattern, the arrangement of the bundle in accordance with the required pattern is obtained in a very secure manner.

For example, such guide pins may be movable between a lifted position extending above the holders positioned alongside each other and a lowered position at a level therebelow. In the lifted position they determine the required pattern, whereas in the lowered position they do not engage the holders or the bundle, such that a complete arrangement can be removed from the apparatus. Furthermore, in the lowered position an arrangement can be created by successively positioning alongside each other the required amount of holders. When such an amount of holders has been positioned alongside each other, the guide pins are lifted and the bundle of second portions of the string is arranged on top of the holders.

Although many types of bundle guide means are conceivable, in a simple embodiment such a bundle guide means comprises at least one partial eye for guiding therethrough the bundle of second string portions. When the bundle guide means moves along with the moveable arm, the bundle of second string portions simply slides through said eye, which process will continue until the cut-off end of the string has left the eye.

Finally, the invention also relates to an arrangement of the devices for training plants, wherein each device for training plants comprises a holder intended for being suspended from a suspension arrangement, such as a stretched cable, and a string of which a first portion is wound onto the holder and a second portion is not, wherein the arrangement comprises a predetermined number of holders positioned alongside each other. According to the present invention, the second portions of all strings are combined into a bundle which is positioned on top of said holders.

Preferably, the arrangement is such, that the bundle is arranged according to a figure-eight pattern.

Hereinafter the invention will be elucidated while referring to the drawings, in which:
Fig. 1 shows a device for training plants;
Fig. 2 shows an arrangement of devices for training plants;
Fig. 3 shows an apparatus for producing an arrangement according to Fig. 2;
Fig. 4 shows a detail of the apparatus of Fig. 3, and
Fig. 5 shows another detail of the apparatus.

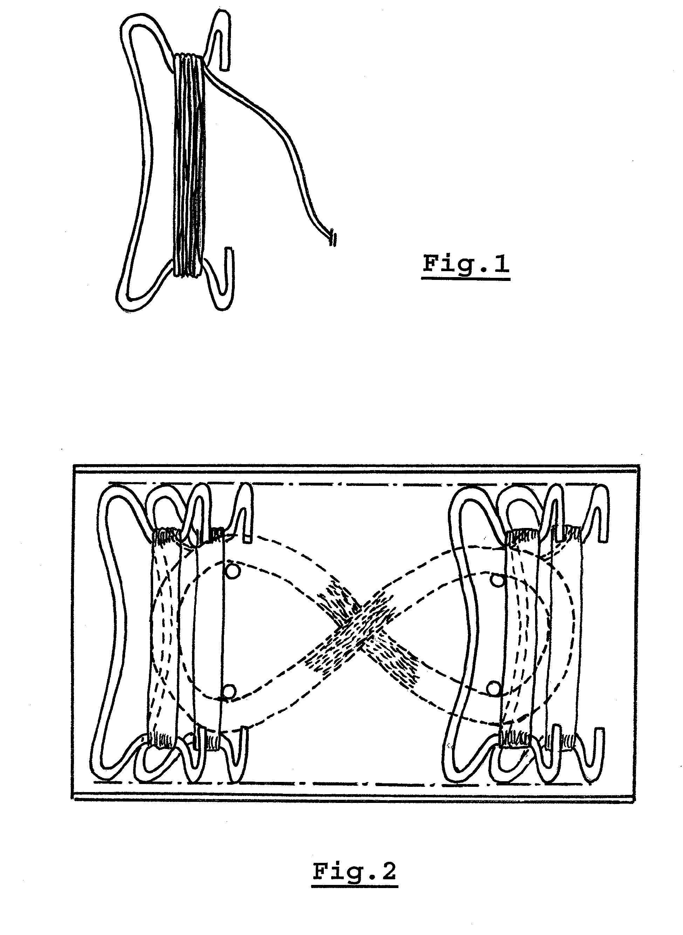

Firstly referring to Fig. 1, a device for training plants is illustrated. Basically said device comprises a holder 1 intended for being suspended from a suspension arrangement, such as a stretched cable. A string has a first portion 2 which is wound onto the holder, and a second portion 3 (only indicated partially in Fig. 1) which is not wound onto the holder.

For a detailed description of the use of such a device reference is made, for example, to EP-A-1.491.087 or EP-B-0.507.378.

Fig. 2 shows in a top plan view a support 4 (such as a tray or box) which supports a number of devices 1. It is noted, that in Fig. 2 only four of such devices 1 have been illustrated, but that a larger amount of devices 1 will be present (as indicated schematically by lines 5). In the illustrated embodiment the devices 1 overlap each other in a roof-tile fashion. The second string portions 3 of all devices 1 are combined into a bundle 6 which is positioned on top of the holders 1. In the embodiment of the arrangement illustrated in Fig. 2, such a bundle is arranged according to a figure-eight pattern.

When a holder is to be used, it is lifted from the support 4 and suspended from the suspension arrangement. During this process its second string portion 3 slides out of the bundle 6. In this manner successive holders 1 can be suspended from the suspension arrangement in a quick manner.

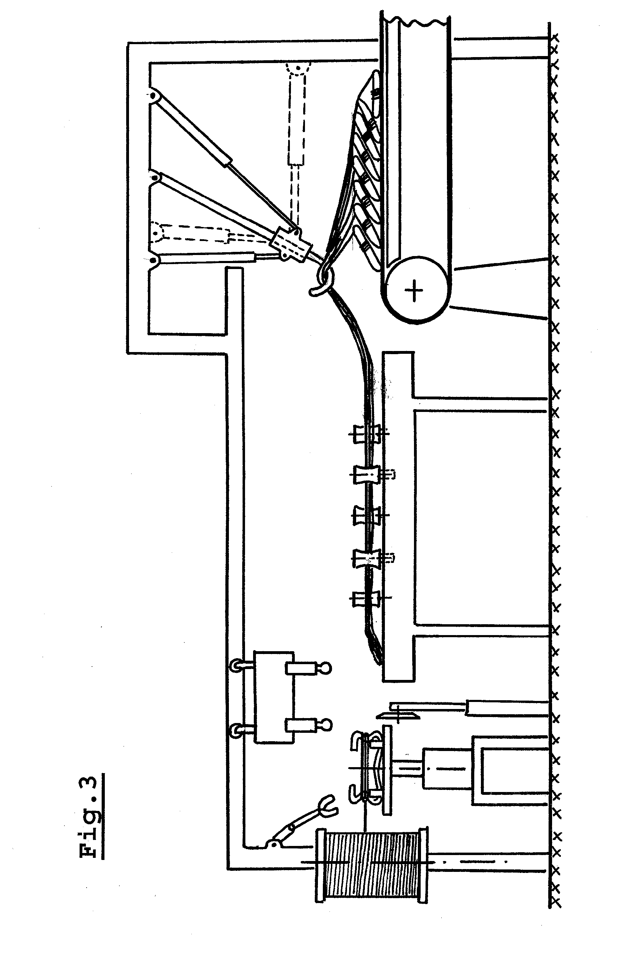

Fig. 3 shows schematically and in a side elevational view an embodiment of an apparatus for producing an arrangement of devices 1, for example as illustrated in Fig. 2.

Basically, such an apparatus comprises first means 7 for winding the first portion 2 of a string on a respective holder 1, second means 8 for transporting the holders 1 towards a collecting location 17 where a predetermined number of holders are positioned alongside each other, third means 9 for combining the second portions 3 of the strings into a bundle 6, and fourth means 10 for positioning said bundle 6 on top of the holders 1 positioned alongside each other.

The first means belong to the state of the art, and thus are not explained in detail here. It is sufficient to state, that a turntable 11 (driven by a motor 32) can hold a holder 1 for winding thereon a string which is supplied from a spool 12 or alike. Means 13 can be provided for attaching the leading end of a string to the holder 1, and thereupon the motor 12 is activated and a desired amount of string is wound onto the holder 1 for creating the first portion 2.

It is noted, that the apparatus may comprise more that one turntable 11, as well as more than one spool 12.

The second means 8 basically comprise a carriage 14 which is guided for a movement along a guide rail 15. The carriage 14 comprises gripping means 16 which are meant for engaging a holder 1, lifting it from the turntable 11 and transporting it towards the collecting location 17.

Although in Fig. 3 such third means are shaped as a moveable carriage, also other means could be provided, such as gripping means 16 provided on the outer end of a piston-cylinder assembly.

When the third means 8 move a holder 1 towards the collecting location 17, an additional amount of string is released by the spool 12. This additional amount defines the second string portion 3. When (or before) the holder 1 has arrived at the collecting location 17, a cutting means 18 is activated for cutting the string.

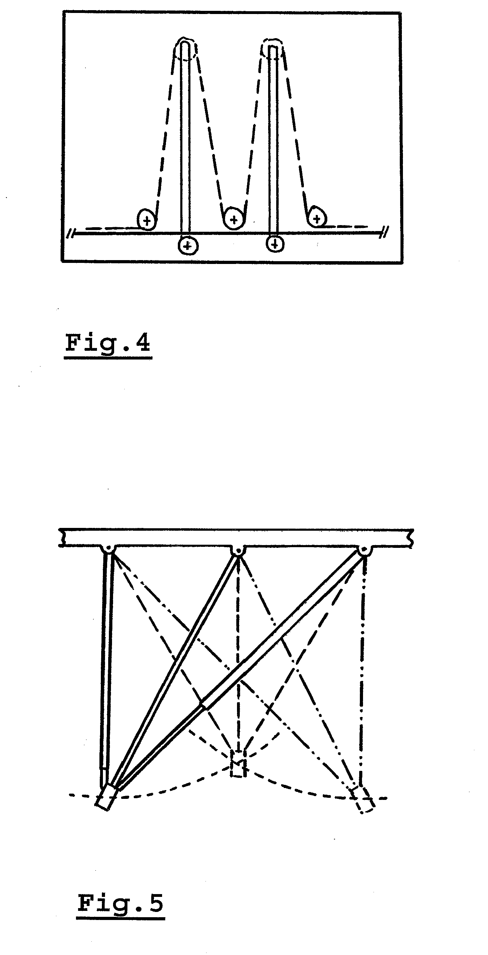

When the holder 1 is moved from the turntable 11 towards the collecting location 17, its second string portion 3 is positioned on a support table 19, between guide rolls 20, 21. Also referring to Fig. 4, which shows a top plan view of the support table 19, it is noted that the guide rolls 20 are stationary, whereas the guide rolls 21 are movable along guides 40. In the position of the guide rolls 21 illustrated in Fig. 24 in full lines the second string portion 3 is deposited between the guide rolls on top of the support table 19. Next the moveable guide rolls 21 are moved towards the position indicated in dotted lines in Fig. 4 (21'), such that the second string portion 3' is positioned according to a zig-zag pattern on top of the support table 19. As a result a rather long second portion 3 of the string may be supported by the support table 19 while keeping the dimensions of the support table 19 as small as possible.

Successive string portions 3 of successive holders 1 are positioned in a corresponding manner, such that finally a bundle 6 (see Fig. 3) of second string portions 3 is created on top of the support table 19.

The fourth means 10 for positioning the bundle 6 of second string portions 3 on top of the holders 1 which are positioned alongside each other at the collecting location 17, basically comprise an arm 22 which is hingeably connected to a frame 23 of the apparatus. The arm 22 is moved by means of two piston-cylinder assemblies 24, 25 and comprises a slide 26 which can move along the arm 22. The slide 26 is provided with a bundle guide means shaped as a hook or eye 27.

In operation, the hook 27 lifts the bundle 6, whereafter the piston-cylinder assemblies 24 and 25 are activated in such a manner that the hook 27 describes a figure-eight pattern while depositing the bundle 6 on top of the holders 1. The creation of such a figure-eight pattern may be aided by guide pins 28 (see Fig. 2) which are movable between a lifted position extending above the holders 1 and a lowered position at a level therebelow. After completion of the figure-eight pattern of the bundle 6 such guide pins 28 may be lowered, whereafter the entire arrangement is removed. For example, the collecting location 17 comprises a moving belt 29 for removing a completed arrangement of holders 1.

For obtaining a neat appearance of the figure-eight pattern of the bundle 6, it is preferred that the bundle guide means (hook 27) is moved above the arrangement of holders 1 as close as possible. However, at the center C (see Fig. 2) of the figure-eight pattern the entire package of second string portions 3 has a larger thickness than the remaining portions of the figure-eight pattern. Thus it is necessary that, when passing said center C, the bundle guide means or slide 26 of the arm 22 is temporarily lifted. For obtaining such a lifting motion, the slide 26 is linked to two extendable linking arms 29 and 30. The opposite ends of the extendable linking arms 29 and 30 are hingeably connected to the frame 23.

Each extendable linking arm is pre-tensioned towards a retracted position.

Referring to Fig. 5, the operation of a combination of extendable linking arms 29 and 30 and movable arm 22 is explained.

The circle segments t1 and t2 indicate the tracks followed by the linking arms 29 and 30, respectively, while in the most retracted position. In the situation indicated in full lines, linking arm 29 is in its fully retracted position, whereas linking arm 30 is extended. The position of the slide 26 of the movable arm 22 corresponds with track t1.

When the movable arm 22 is pivoted towards its position 22' by means of a proper activation of piston-cylinder assemblies 24 and 25 (see Fig. 3) the slide 26 will still follow track t1, during which motion linking arm 29 remains in its fully retracted position. Linking arm 30 will be retracted during this motion.

Arriving at the intersection between t1 and t2, slide 26 has reached it uppermost position (26'), and linking arms 29 and 30 are fully retracted (29' and 30', respectively).

Moving the movable arm 22 further, slide 26 will follow track t2 and will eventually reach position 26''. In this position linking arm 30 is fully retracted (30''), whereas linking arm 29 is extended (position 29'').

It follows, that the slide 26 follows a track defined by t1 and t2, wherein at the intersection of t1 and t2 slide 26 (in position 26') is lifted, such that it can pass the center C of the figure-eight pattern without touching the bundle 6.

The invention is not limited to the embodiment described before, which may be varied widely within the scope of the invention as defined by the appending claims.

## Claims

1. Method for producing an arrangement of devices for training plants, wherein each device for training plants comprises a holder intended for being suspended from a suspension arrangement, such as a stretched cable, and a string of which a first portion is wound onto the holder and a second portion is not, comprising a first step of winding the first portion of a string on a respective holder, and a second step of transporting the holders towards a collecting location where a predetermined number of holders are positioned alongside each other,
**characterized by**
- a third step of combining the second portions of the strings into a bundle;
- a fourth step of positioning said bundle on top of the holders positioned alongside each other.

2. Method according to claim 1, wherein the third step comprises a cutting step for cutting the string loose from a string supply and a guide step for positioning each second string portion alongside the other second string portions at a temporary storage.

3. Method according to claim 1 or 2, wherein during the fourth step the bundle is positioned according to a figure-eight pattern.

4. Apparatus for producing an arrangement of devices for training plants, wherein each device for training plants comprises a holder intended for being suspended from a suspension arrangement, such as a stretched cable, and a string of which a first portion is wound onto the holder and a second portion is not, with first means for winding the first portion of a string on a respective holder, and second means for transporting the holders towards a collecting location where a predetermined number of holders are positioned alongside each other,
**characterized by**
- third means for combining the second portions of the strings into a bundle;
- fourth means for positioning said bundle on top of the holders positioned alongside each other.

5. Apparatus according to claim 4, wherein the third means comprise cutting means for cutting the string loose from a string supply and guide means for each second string portion positioning each second string portion alongside the other second string portions at a temporary storage.

6. Apparatrus according to claim 5, wherein the guide means position the second string portions according to a zig-zag pattern at the temporary storage.

7. Apparatus according to claim 5 or 6, wherein the temporary storage is a substantially horizontally extending support table.

8. Apparatus according to one of the claims 4-7, wherein the fourth means comprise a movable arm having a free end which is provided with bundle guide means, and an opposite end connected to a fixed pivot, wherein drive means are provided for moving the arm, and thus the bundle guide means, according to a predetermined pattern.

9. Apparatus according to claim 8, wherein the movable arm is driven in such a manner that its free end moves according to a figure-eight pattern.

10. Apparatus according to claims 8 or 9, wherein the arm extends substantially horizontally downwards from the fixed pivot and the drive means comprise two piston-cylinder assemblies of which the working lines include an angle.

11. Apparatus according to claim 9, wherein the bundle guide means of the movable arm is driven in such a manner that it is lifted relative to the holders at the center of the figure-eight pattern.

12. Apparatus according to claim 11, wherein the bundle guide means is slidable along the arm.

13. Apparatus according to claim 12, wherein the sliding movement of the bundle guide means is caused by two extendable linking arms, each having a first end connected to said bundle guide means and each having a second end, which second ends are connected to two respective fixed points at opposite sides of the pivot of the movable arm, and wherein the linking arms are pre-tensioned towards a retracted position.

14. Apparatus according to any of the claims 9-13, wherein the fourth means further comprise guide pins for defining the shape of the figure-eight pattern.

15. Apparatus according to claim 14, wherein the guide pins are movable between a lifted position extending above the holders positioned alongside each other and a lowered position at a level therebelow.

16. Apparatus according to any of the claims 8-15, wherein the bundle guide means comprise at least one partial eye for guiding therethrough the bundle of second string portions.

17. Arrangement of devices for training plants, wherein each device for training plants comprises a holder intended for being suspended from a suspension arrangement, such as a stretched cable, and a string of which a first portion is wound onto the holder and a second portion is not, wherein the arrangement comprises a predetermined number of holders positioned alongside each other,
**characterized in that**
the second portions of all strings are combined into a bundle which is positioned on top of said holders.

18. Arrangement according to claim 17, wherein the bundle is arranged according to a figure-eight pattern.
